# EUROPEAN PATENT SPECIFICATION

(11) **EP 4 421 238 B1**
(45) Date of publication and mention of the grant of the patent: **20.05.2026**
(21) Application number: 22882271.4
(22) Date of filing: 09.05.2022
(51) Int. Cl.: E01C 11/22, E01C 9/00, E01C 5/22, F24S 25/61

(54) **PHOTOELECTRIC WATER-PERMEABLE PAVEMENT CONFIGURATION**
PHOTOELEKTRISCHE WASSERDURCHLÄSSIGE STRASSENBELAGKONFIGURATION
CONFIGURATION DE CHAUSSÉE PHOTOÉLECTRIQUE PERMÉABLE À L'EAU

(30) Priority: 20.10.2021 CN 202111218354
(43) Date of publication of application: 28.08.2024
(73) Proprietor: Chen, Jui-Wen, New Taipei City 238, Taiwan (TW)
(72) Inventor: Chen, Jui-Wen, New Taipei City 238, Taiwan (TW)
(74) Representative: Horak, Michael
(86) International application number: PCT/CN2022/091723
(87) International publication number: WO 2023/065646

(56) References cited:
- CN-A- 1 566 534
- CN-U- 208 869 898
- CN-U- 209 323 297
- CN-U- 216 765 464
- JP-A- 2006 132 302
- KR-A- 20200 078 030
- TW-U- M 581 122

## Description

### TECHNICAL FIELD OF THE INVENTION

The present invention relates to a photoelectric water-permeable pavement configuration, and more particularly to a catastrophe-preventing pavement that is not only constructed as a green-energy pavement that includes a solar energy power system, but also has an effect of fast conducting and draining rainwater.

### DESCRIPTION OF THE PRIOR ART

From the ancient time, soils provide functions of water collection and water retention. However, due to increasing expansion of cities, all sorts of man-made facility have been massively built so that non-water-permeable pavements are continuously increased, resulting in catchment basins losing the functionality of water retention and also leading to a great increase of runoff flows on the ground surface, this, in combination with climate change caused by global warming, making all regions facing an increased strain of flooding protection.

Thus, to fight against the global warming in order to reduce the loading of the environment and the negative impacts caused thereby, recently, various regions proposed responsively regulating measures and sustainable development policies, such as carrying out policies regarding sponge cities and energy transition. The sponge city is a novel city model in which functions of flooding prevention and ecology protection are built in the city, such as building water permeable roads to replace non-water-permeable roads to achieve water absorption, water storage, water seeping, and water cleaning during raining and to release water moisture during dry and hot time to improve the heat island effect for preventing expansion of global warming. Energy transition concerns popularization of use of renewable energy in order to improve energy structure through green energy and to reduce emission of greenhouse gases, improve environment quality, and leave a clean earth to the future generations.

Examples of prior art can be found in documents CN208869898U and CN1566534A.

In view of the above, based on the above-described needs, the present inventor made enthusiastic researches and designed assembly to eventually create, through careful evaluations, the present invention that is effective and novel, and useful.

### SUMMARY OF THE INVENTION

The primary objective of the present invention is to provide a photoelectric water-permeable pavement configuration, which not only uses a solar panel to convert energy of light into electrical energy, but also quickly drain rainwater on the ground surface to the underground so as to lower down the probability of occurrence of flooding on the ground surface and also to re-supplement the underground water resources to realize a ground surface pavement that features both green energy and catastrophe prevention.

To achieve the above objective, the present invention provides a photoelectric water-permeable pavement configuration, which comprises a photoelectric module and a water-permeable unit:
the photoelectric module being paved on the ground surface and comprising a base, the base having a periphery in which a water-permeable channel is arranged, the base being provided, on a top thereof, with an enclosure frame, the enclosure frame having an interior in which a solar panel is received and mounted, the base having a bottom surface on which fixing members are arranged for positioning atop the water-permeable unit, a hollowed region being formed in an interior of the base, a periphery of the hollowed region being formed with through holes for receiving communicating pipes to fit therein for inter-connecting and communicating with an adjacent base;
the water-permeable unit comprising a water-permeable pavement and arranged under the photoelectric module;
wherein the pavement configuration formed of the above components allows the photoelectric module to convert energy of sun light into electrical energy for use and also quickly drains rainwater on the ground surface through water-permeable pipes to underground by means of drainage holes formed in the water-permeable unit.

The efficacy of the present invention is that the photoelectric water-permeable pavement is formed of components such that in a sunny day, the photoelectric module arranged on the ground surface converts the energy of the sun light into electrical energy for use. During raining, rainwater can be quickly drained through each of the drainage holes to the underground so as to not only prevent the solar panel from being soaked in water but also to prevent the chance of occurrence of flooding on the ground surface and also to re-supplementing the underground water resources to realize a ground pavement that features both green energy and catastrophe prevention.

### BRIEF DESCRIPTION OF THE DRAWINGS

FIG. 1 is a perspective view of a photoelectric module and a water-permeable unit of the present invention.
FIG. 2 is an exploded view of the photoelectric module of the present invention.
FIG. 2A is an exploded view of a photoelectric module of another embodiment of the present invention.
FIG. 3 is an exploded view of a base of the photoelectric module and the water-permeable unit of the present invention.
FIG. 4 is a schematic assembled view of the base the photoelectric module and the water-permeable unit of the present invention.
FIG. 4A is an enlarged view of a portion of the present invention of FIG. 4.
FIG. 5 is a schematic view showing constructing and paving of a photoelectric water-permeable pavement of the present invention.
FIG. 6 is a schematic view showing mounting of a solar panel in the photoelectric module of the present invention.
FIG. 7 is a schematic view showing the photoelectric water-permeable pavement of the present invention after completion of construction.
FIG. 8 is a cross-sectional view of a portion of a photoelectric water-permeable pavement configuration of the present invention.
FIG. 9 is an exploded view of a modularized pavement embodiment of the present invention.
FIG. 10 is a schematic view showing operation of pre-casting of the modularized pavement of the present invention.
FIG. 11 is a perspective view showing the modularized pavement of the present invention.
FIG. 12 is a schematic view showing on-site paving of the modularized pavement of the present invention.
FIG. 13 is a schematic view showing the modularized pavement of the present invention after completion of construction.

### DETAILED DESCRIPTION OF THE PREFERRED EMBODIMENT

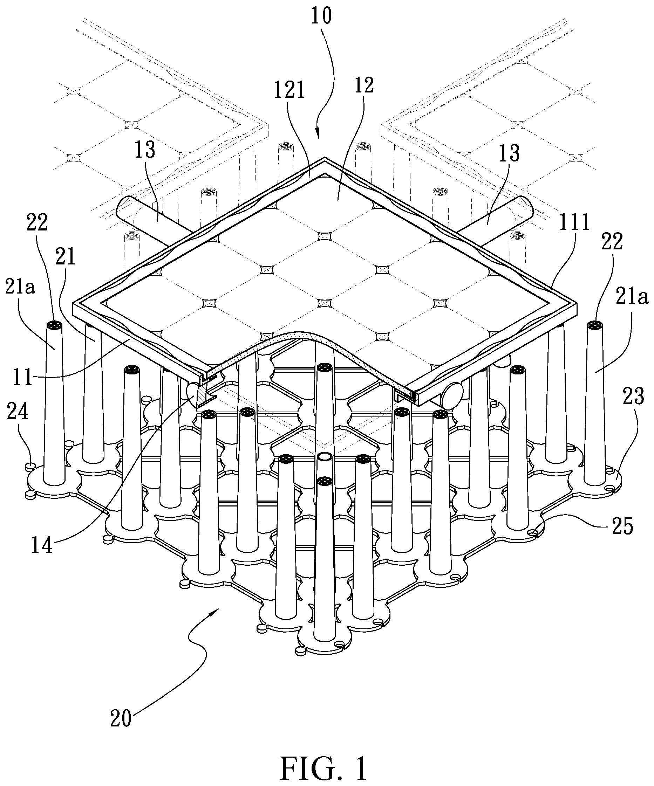

Referring to FIGS. 1-3, the present invention provides a photoelectric water-permeable pavement configuration, which comprises a photoelectric module 10 and a water-permeable unit 20 arranged below the photoelectric module 10.

The photoelectric module 10 comprises a base 11, a solar panel 12, and communicating pipes 13. The base 11 is arranged and positioned on a ground surface. A water-permeable channel is formed at the periphery of the base. An enclosure frame 111 is arranged on a top of the base, and the solar panel 12 is mounted in an interior of the enclosure frame 111. Fixing members 112 are provided on a bottom surface of the base 11 for positioning on the water-permeable unit 20. Further, a hollowed region 113 is formed in an interior of the base 11, and through holes 114 are arranged at the periphery of the hollowed region 113 to extend outwards. The through holes 114 receive the communicating pipes 13 to penetrate therein and combine therewith, such that the communicating pipes 13 can be buried below the ground surface in a condition of connecting to and communicating with a base 11 on an adjacent side.

In case that no base 11 is arranged on the adjacent side of the base 11 to connect thereto and communicate therewith, the through hole 114 on such a side is fit with an end cap 14 for closure. In the present invention, the bottom surface of the base 11 is further provided with a plurality of anchoring portions 115, which form a ground anchor structure after concrete grout 60 cures, so as to make the base 11 more securely paved on the ground surface.

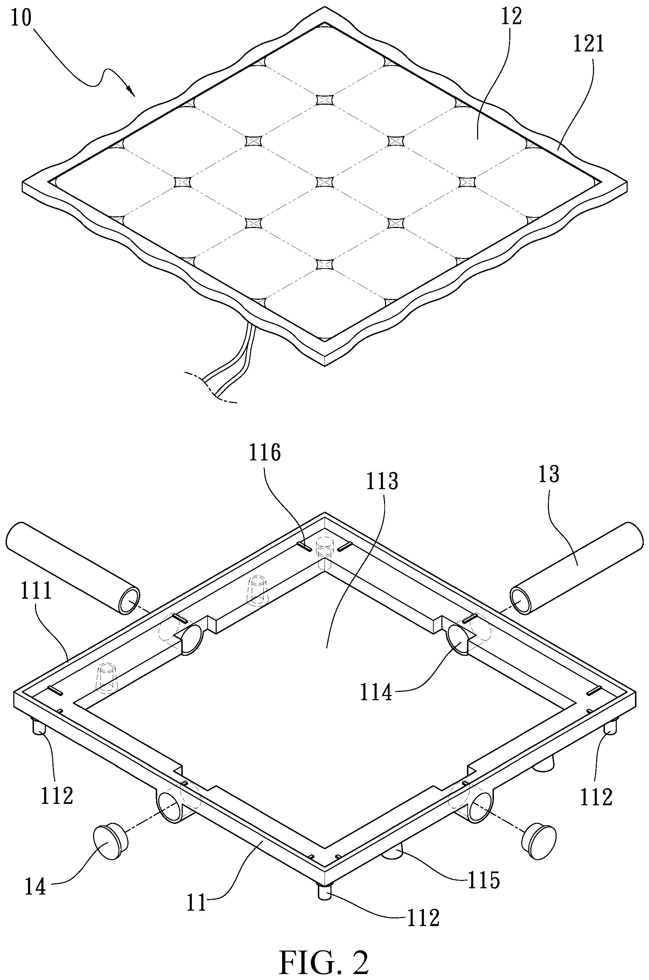

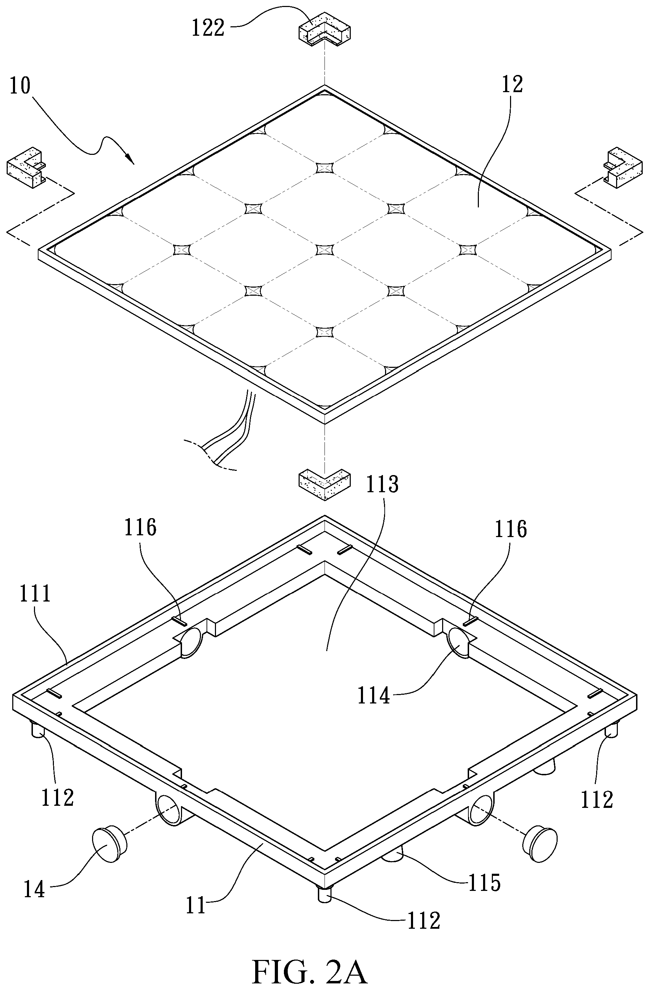

Referring to FIGS. 2 and 2A, for the water-permeable channel formed at the periphery of the base 11, the solar panel 12 of the photoelectric module 10 can be made in various shapes according to the material of an outer frame 121, so that the photoelectric module 10, after fit into the base 11, is mounted on a stepped edge of the enclosure frame 111 of the base 11 in a manner of forming gaps therebetween. If the outer frame 121 is made of a plastic material, the periphery of the outer frame 121 is directly formed in a wavy shape, while the stepped edge the enclosure frame 111 of the base 11 is formed with raised ribs 116 arranged thereon, so that when the solar panel 12 is mounted on the stepped edge of the enclosure frame 111 of the base 11, gaps are formed therebetween, as shown in FIG. 2. If the outer frame 121 of the solar panel 12 is made of a metallic material, the volume of the solar panel 12 is arranged to be slightly smaller than an area of the enclosure frame 111 of the base 11, and a pad block 122 is arranged at each of corners of the outer frame 121 of the solar panel 12, so that the periphery of the solar panel 12 and the enclosure frame 111 of the base 11 can be mutually fit to each other in such a manner as forming gaps therebetween, as shown in FIG. 2A. As such, easy mounting can be realized, while rainwater falling on the ground surface can pass through the gaps between the solar panel 12 and the enclosure frame 111 of the base 11 to downward penetrate through the gaps so formed to get into the hollowed region 113.

As an alternative embodiment not shown in the drawings, to form the water-permeable channel at the periphery of the base 11, the periphery of the base 11 is arranged as being integrally formed with water-permeable holes or water-permeable gaps therein, or alternatively, extra members are additionally fit thereto to form water-permeable holes or water-permeable gaps. In this way, the solar panel 12 can be directly mounted in the interior of the enclosure frame 111 without water-permeable hole or water-permeable gap formed by means of fitting between the peripheries of the two. This technical solution is also included in the scope of the claims of the present invention.

The water-permeable unit 20 comprises a frame structure that is formed by interconnection of a plurality of vertical water-permeable pipes (21, 21a) arranged at intervals and is arranged under the photoelectric module 10. In the frame structure, the water-permeable pipes 21a that are located between two adjacently arranged photoelectric modules 10 have a relatively long pipe body of which a top end is flush with the ground surface, while the remaining water-permeable pipes 21 are mounted under the base 11 of the photoelectric module 10. The water-permeable unit 20 includes a grating top-plate 22 arranged at an upper pipe opening of each of the water-permeable pipes (21, 21a), or a lid or a net cover is alternatively mounted thereon, so as to provide a blocking effect to prevent jamming resulting from pouring of concrete grout 60, while a bottom of the pipe body is provided with an outward expanded connecting rib 23 for connection with another one of the water-permeable pipes (21, 21a), so that the water-permeable pipes (21, 21a) are interconnected to form a frame structure. Further, projecting tenons 24 and fitting mortises 25, which correspond to each other, are formed in outer circumferences of outermost connecting ribs 23 of the frame structure of two adjacent edges, so that another water-permeable unit 20 can be connected thereto for laying.

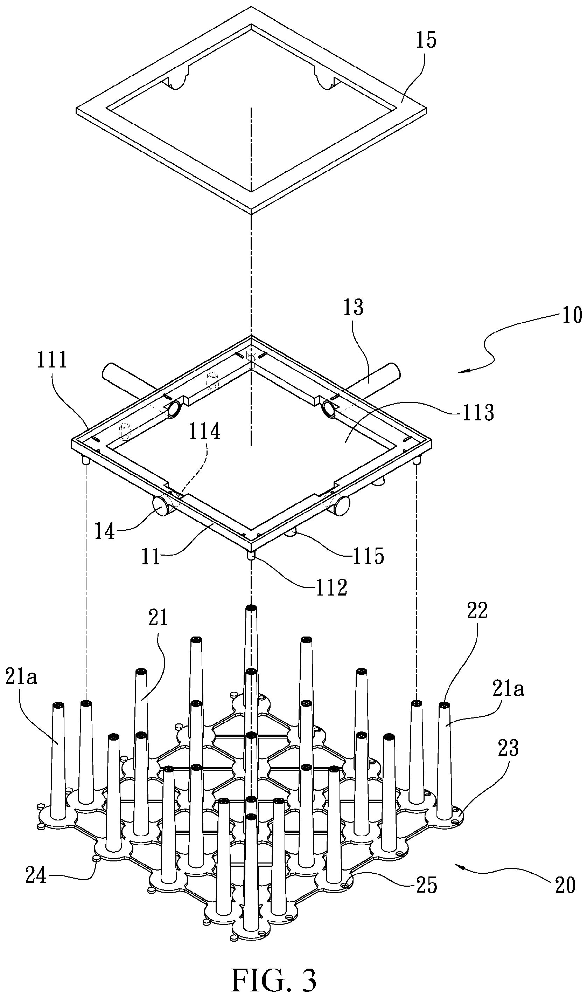

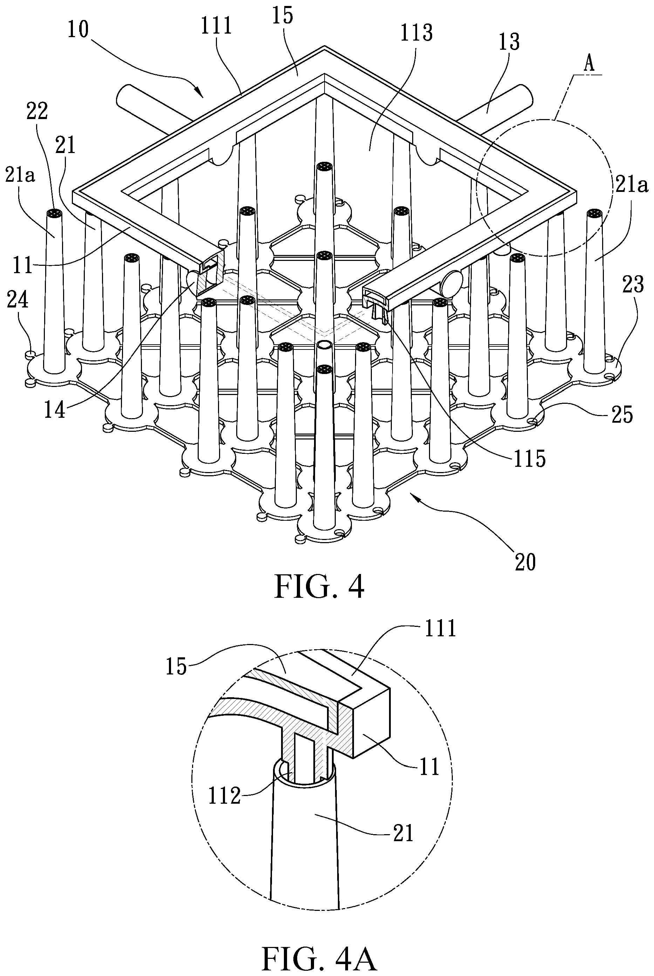

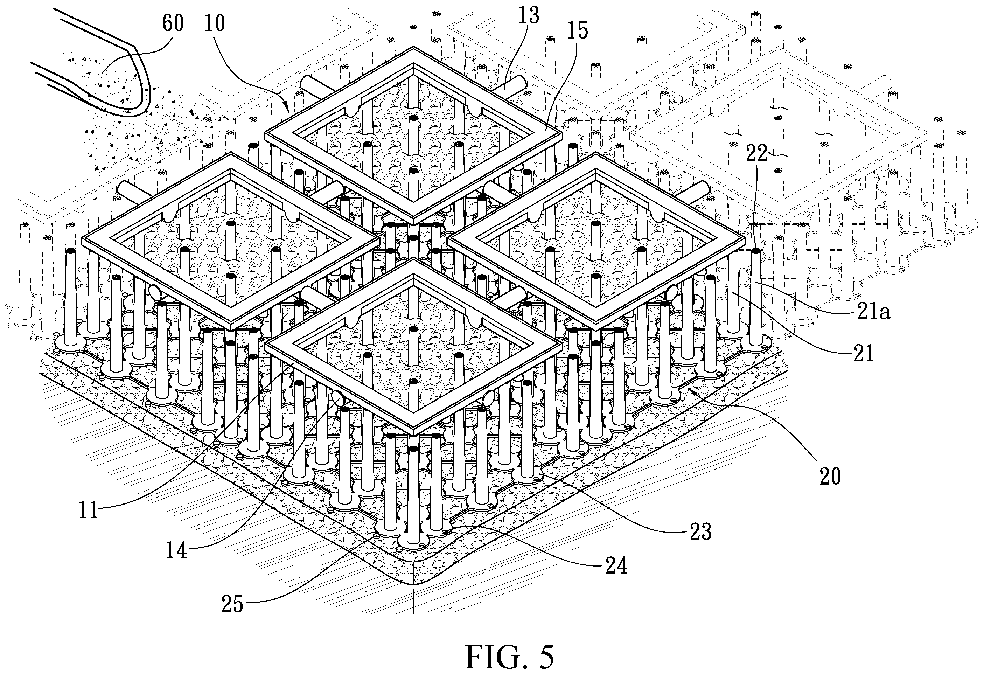

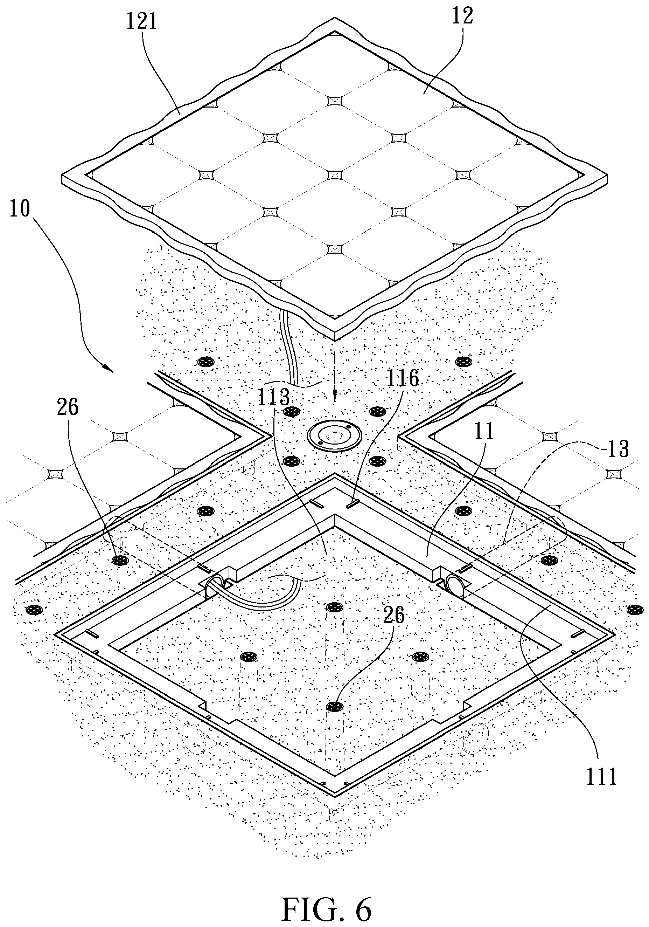

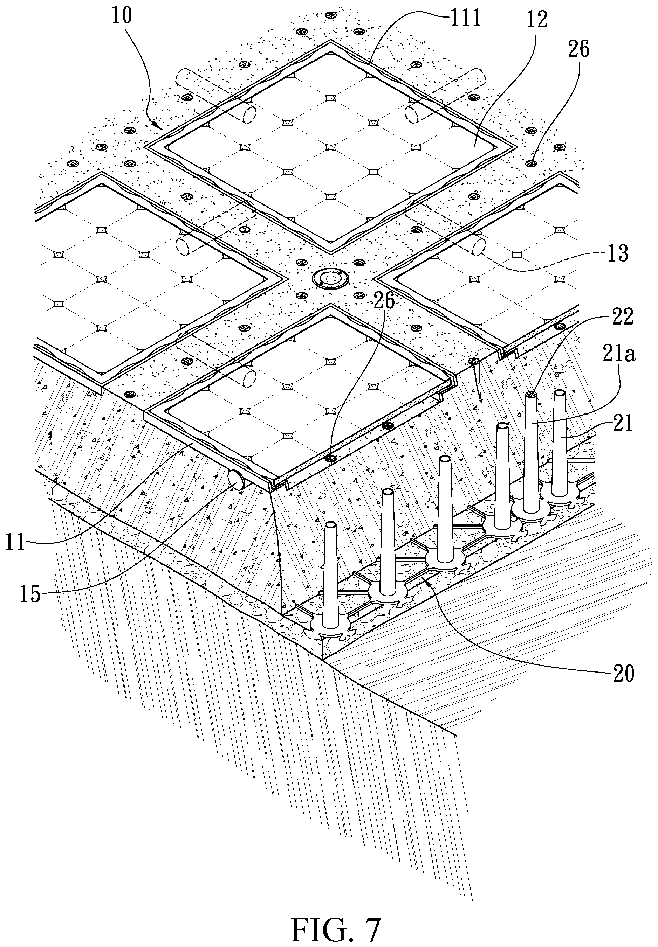

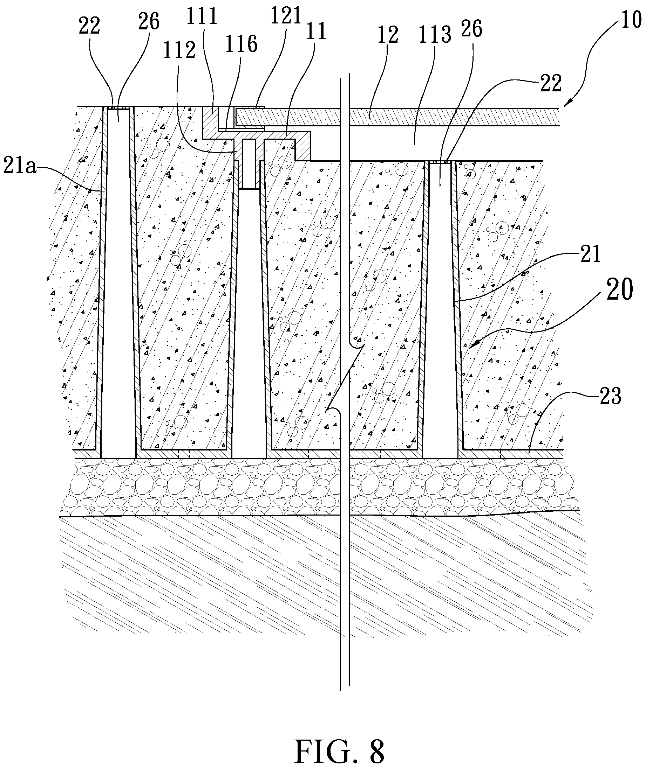

Referring to FIGS. 3-8, in the implementation of the present invention, land preparation is first conducted on the site where the photoelectric water-permeable pavement is to be constructed, and based on the general pavement planning chart, the water-permeable units 20 are completely laid and arranged on a construction area corresponding in area to the pavement to be constructed. Subsequently, the fixing members 112 projecting from underside of the bases 11 of the photoelectric modules 10 are fit into and connected with pipe openings of tops of the corresponding water-permeable pipes 21 of the water-permeable units 20 to achieve positioning, so that the bases 11 are securely laid atop the water-permeable units 20, and the water-permeable pipes 21 are exposed in and surrounded by the hollowed regions 113, while the water-permeable pipes 21a that are of a relatively long pipe body in the water-permeable units 20 are arranged between adjacent bases 11. Further, the grating top-plates 22 arranged on the pipe openings of the water-permeable pipes 21 are made in the form of a thin sheet, so that in mounting the bases 11 of the photoelectric module 10, the fixing members 112 at the bottoms thereof can be directly applied to easily break them into an open condition for receiving to fulfill fitting and positioning. Afterwards, two ends of the communicating pipes 13 are respectively fit into and connected with the through holes 114 of two adjacent bases 11 to achieve an inter-communicating state between each of the bases 11. Finally, a pouring operation of concrete grout 60 is carried out to form a water-permeable pavement. It is alternatively possible to adopt either one of a water-permeable pavement that is formed by directly paving a water-permeable material, or a water-permeable pavement formed by drilling holes in any kind of pavement to form water-permeable holes.

The covers that are applied for temporarily blocking are removed after the pouring operation, so that jamming caused in the operation of pouring concrete grout can be avoided.

Further, to ease the pouring operation of concrete grout 60, a frame cover 15 is set on and covers between an inner side of the enclosure frame 111 on the top of the base 11 of the photoelectric module 10 and the hollowed region 113 before the grout pouring operation is conducted, or alternatively, a feasible way that is not shown in the drawings may be adopted to make the covering with a piece of adhesive tape or nonwoven fabric in order to prevent the region of the base 11 in which the solar panel 12 is to be mounted from being shielded by the concrete grout 60, and after the concrete grout 60 is set, the frame cover 15, the adhesive tape or nonwoven fabric is then removed. Further, during the performance of the pouring operation of the concrete grout 60, since each exposed one of the water-permeable pipes (21, 21a) of the water-permeable unit 20 is provided with the grating top-plate 22 to cover the upper end opening thereof, so that the concrete grout 60 is blocked outside the pipe opening, and thus, after the concrete grout is moderately set and shaped, it only needs to apply a high-pressure spray gun to spray high-pressure air or water jet to remove grout remaining on the grating top-plate 22 of the end opening of each of the water-permeable pipes (21, 21a) so as to construct a water-permeable pavement of a concrete structure having a plurality of drainage holes 26 formed in the periphery of the base 11 and the interior of the hollowed region 113. Finally, the solar panels 12 are separately mounted in the bases 11 in an electrically connected manner by means of electrical cables extending through the communicating pipes 13 to thereby complete the construction of the entire photoelectric water-permeable pavement.

In a rainy season, heavy rains may instantaneously fall on the ground surface, and by means of the drainage holes 26 formed between the photoelectric module 10 in the ground surface, and the gaps between the solar panels 12 and the bases 11, rainwater penetrates down into the drainage holes 26 in the hollowed region 113, and by means of the water-permeable pipes (21, 21a), the rainwater is quickly drained into the underground. This achieves preventing the probability of regional flooding occurring in a short period of time and also helps supplementing underground water resources, so that a function of fast draining water from the ground surface in a short period of time and supplementing underground water is realized.

In sunny days, the solar panels 12 arranged with the photoelectric modules 10 may convert energy of sun light into electrical energy. And, also, when the temperature on the ground surface is high, the great content of water in the underground allows conversion into vapor and releases the vapor to the outside . For the photoelectric module 10, this can provide an effect of temperature lowering for the solar panel 12 to extend the service life of the solar panel 12, and also helps increase the light-electricity conversion efficiency, and may provide, for the entire environment, heat exchange in the environment to eliminate heat island effect or reduce heat island effect. Further, electricity generation achieved with the solar energy requires no consumption of fuel and has no noise and no air pollution and is a kind of clean energy that is friendly to the Earth, and the electrical power so generated can be effectively used in neighboring areas.

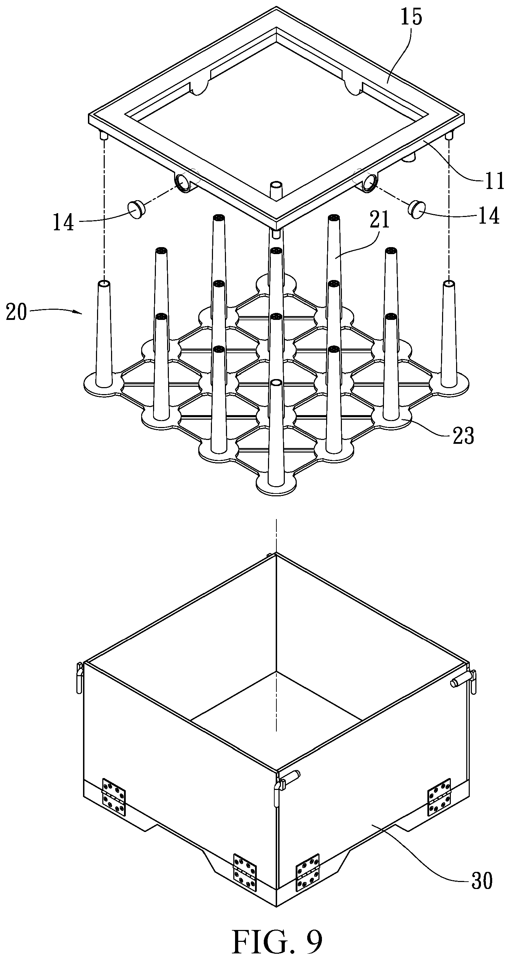

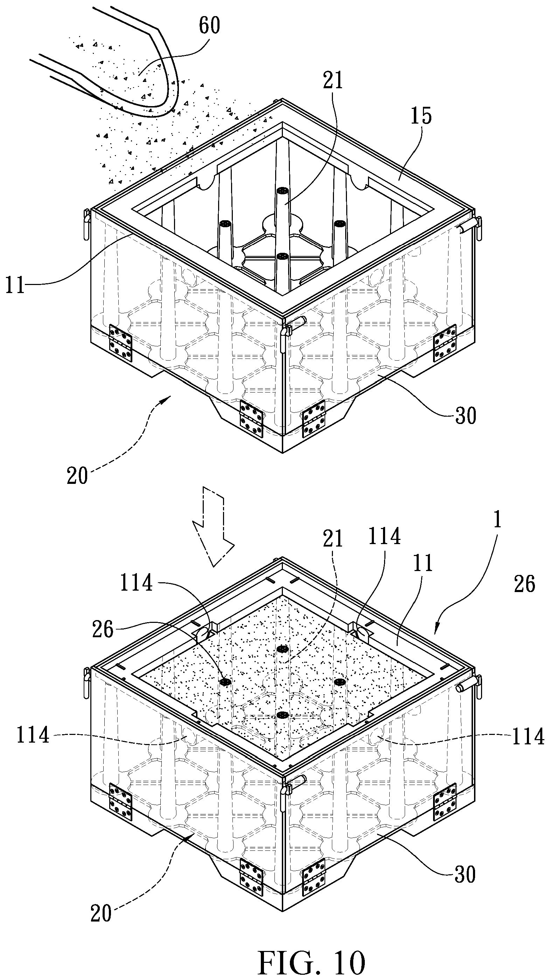

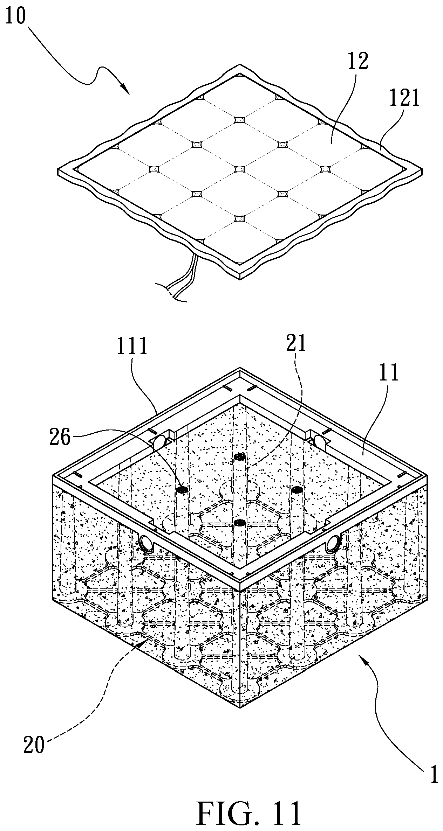

Referring to FIGS. 9-11, in another embodiment of the present invention, the photoelectric water-permeable pavement is formed in a modularized manner, in which the base 11 that is provided with the photoelectric module 10 is formed, in four edges thereof, with the through holes 114, and an end cap 14 is arranged and fixed an outside of each of the through holes 114 for closure, and is placed, after combination with the corresponding water-permeable unit 20, into a pre-casting mold 30, and the top of the base 11 is covered with the frame cover 15, or is shielded by means of the adhesive tape or nonwoven fabric in an alternative implementation not shown in the drawings. Afterwards, concrete grout is poured into the mold 30, and after the concrete grout is cured and set, the frame cover 15 or the nonwoven fabric is removed to form a precast plate module 1.

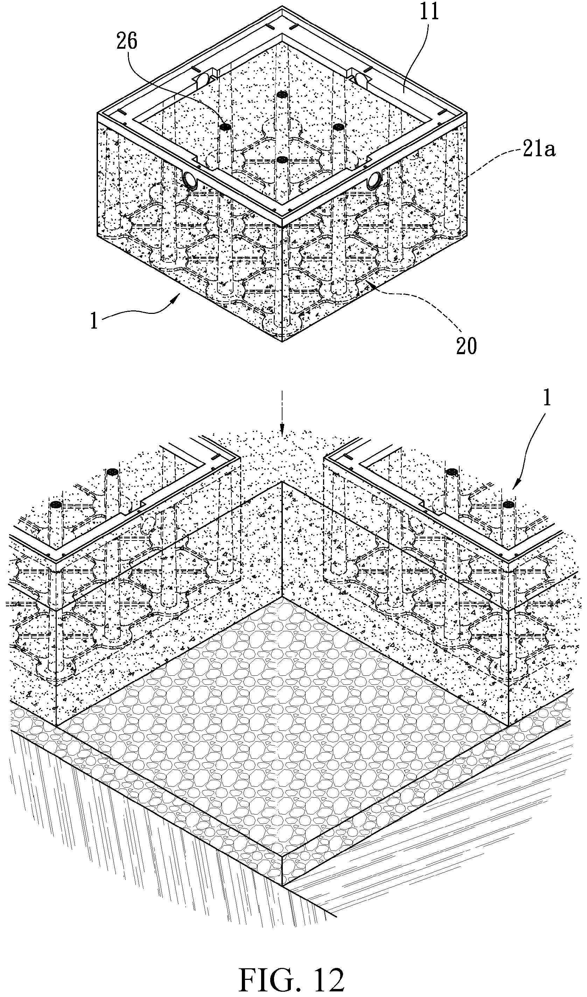

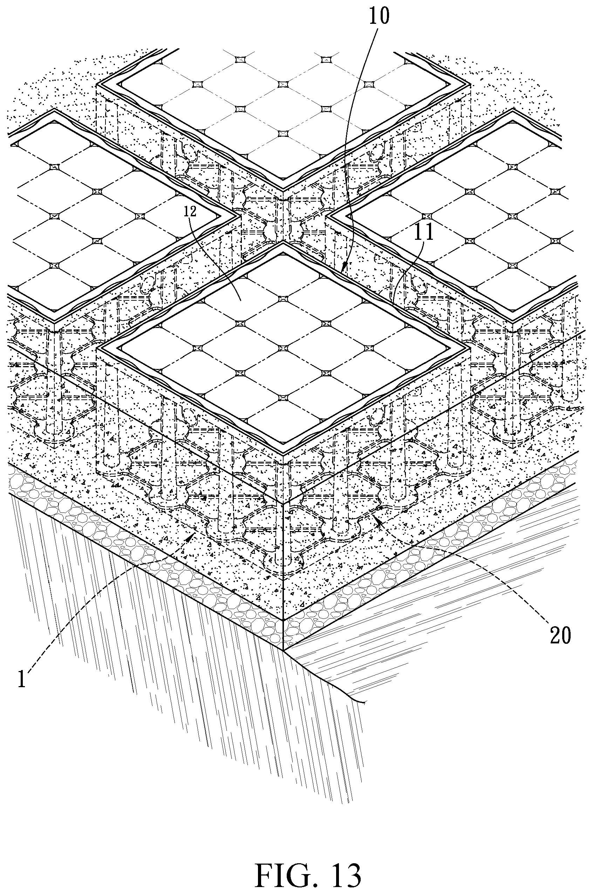

Referring to FIGS. 12 and 13, in implementation, the plate module 1 of the photoelectric water-permeable pavement is fabricated, through pre-casting, in a workshop. After land preparation of a construction site where the photoelectric water-permeable pavement is to be constructed has completed, the precast plate module 1 is transported to the construction site for directly laying and paving, and finally, the solar panel 12 is mounted. As such, the process of construction on the site can be simplified and eased, and the time of the entire construction operation can be shortened to reduce the inconvenience and troubles that the construction may cause on road users.

From the above, the following advantages are provided:
(1) The renewable, persistent, and clean green energy based power generation helps improve the energy structure, reduces the emission of green-house gases, and also reduce air pollution to improve environment quality.
(2) The runoff flows on the ground surface is reduced, and the probability of occurrence of flooding is reduced, and rainwater can be recycled and underground water resources can be re-supplemented, so as to not only achieve the purpose of water retention in the ground but also to release water moisture for heat exchange with ground surface temperature to regulate the temperature and humidity of the entirety of the environment to effectively reduce the heat island effect or prevent the occurrence of the heat island effect to thereby build up a more efficient sponge city ecological environment.

In summary, the present invention provides a ground pavement that features both green energy and catastrophe prevention, showing a value of use in the industry, and as such, a patent application is proposed. However, the above provides only the preferred embodiments of the present invention and should not be construed as limiting to the scope of implementation of the present invention. All simple equivalent variations and modifications that are based on the claims and the contents of the specification of the present invention are considered falling in the scope of the present invention defined by the claims.

## Claims

1. A photoelectric water-permeable pavement configuration, which is formed of a photoelectric module (10) and a water-permeable unit (20), **characterized in that**:
the photoelectric module (10) is positioned on a ground surface and comprises a base (11), the base (11) having a periphery in which a water-permeable channel is arranged, the base (11) being provided, on a top thereof, with an enclosure frame (111), the enclosure frame (111) having an interior in which a solar panel (12) is received and mounted, the base (11) having a bottom surface on which fixing members (112) are arranged for positioning atop the water-permeable unit (20), a hollowed region (113) being formed in an interior of the base (11), a periphery of the hollowed region (113) being formed with through holes (114) for receiving communicating pipes (13) to fit therein for inter-connecting and communicating with an adjacent base (11); and
the water-permeable unit (20) comprises a water-permeable pavement and is arranged under the photoelectric module (10);
wherein the pavement configuration formed of the above components allows the photoelectric module (10) to convert energy of sun light into electrical energy for use and also quickly drains rainwater on the ground surface through water-permeable pipes (21, 21a) to underground by means of drainage holes formed in the water-permeable unit (20).

2. The photoelectric water-permeable pavement configuration according to claim 1, **characterized in that** water-permeable pipes (21a) of a frame structure of the water-permeable unit (20) that are arranged between two adjacent photoelectric modules (10) have a relatively long pipe body and has a top end that is flush with the ground surface.

3. The photoelectric water-permeable pavement configuration according to claim 1, **characterized in that** the water-permeable channel arranged in the periphery of the base (11) comprises a wavy configuration of a periphery of the solar panel (12) of the photoelectric module (10) positioned in an interior of the enclosure frame (111) of the base (11), and raised ribs (116) provided on a bottom of the enclosure frame (111), so as to form gaps between the solar panel (12) and the base (11) to allow the rainwater to penetrate down therethrough.

4. The photoelectric water-permeable pavement configuration according to claim 1, **characterized in that** the water-permeable channel arranged in the periphery of the base (11) comprises a pad block (122) arranged at each of corners of the solar panel (12) of the photoelectric module (10) for fitting into an interior of the enclosure frame (111) of the base (11), and raised ribs (116) provided on a bottom of the enclosure frame (111), so as to form gaps between the solar panel (12) and the base (11) to allow the rainwater to penetrate down therethrough.

5. The photoelectric water-permeable pavement configuration according to claim 1, **characterized in that** the water-permeable channel arranged in the periphery of the base (11) comprises water-permeable holes or water-permeable gaps that are integrally formed in the periphery of the base (11), an extra member being additionally fit thereto to form water-permeable holes water-permeable gaps.

6. The photoelectric water-permeable pavement configuration according to claim 1, **characterized in that** an undersurface of the base (11) of the photoelectric module (10) is provided with anchoring portions (115) for more securely combining with concrete.

7. The photoelectric water-permeable pavement configuration according to claim 1, **characterized in that** the water-permeable unit (20) comprises a frame structure formed of a plurality of vertical water-permeable pipes (21, 21a) and is arranged under the photoelectric module (10), and is poured with concrete grout to construct a concrete structure pavement having a plurality of drainage holes.

8. The photoelectric water-permeable pavement configuration according to claim 1, **characterized in that** the water-permeable unit (20) is formed as one of a water-permeable pavement by directly paving a water-permeable material and a water-permeable pavement in which holes are drilled in a pavement to form water-permeable holes.

9. The photoelectric water-permeable pavement configuration according to claim 1, **characterized in that** a piece of nonwoven fabric is arranged between an inner side of the enclosure frame (111) of the base (11) of the photoelectric module (10) and the hollowed region (113) for shielding.

10. The photoelectric water-permeable pavement configuration according to claim 7, **characterized in that** the water-permeable unit (20) comprise a grating top-plate (22) mounted on a pipe opening of a top of each of the water-permeable pipes (21, 21a), and a bottom of a pipe body is provided with an outward expanded connecting rib (23) for connection with another one of the water-permeable pipes (21, 21a), so that the water-permeable pipes (21, 21a) are interconnected to form a frame structure.

11. The photoelectric water-permeable pavement configuration according to claim 7, **characterized in that** projecting tenons (24) and fitting mortises (25), which correspond to each other, are formed in outer circumferences of outermost connecting ribs (23) of two adjacent edges for laying and connecting of another water-permeable unit (20).

12. The photoelectric water-permeable pavement configuration according to claim 1, **characterized in that** the base (11) of the photoelectric module (10) and the water-permeable unit (20) are correspondingly combined and a mold (30) is applied for pre-casting a plate module (1) with concrete grout (60) for laying.

## Patentansprüche

1. Photoelektrische, wasserdurchlässige Straßenbelagsanordnung, die aus einem photoelektrischen Modul (10) und einer wasserdurchlässigen Einheit (20) gebildet ist, **dadurch gekennzeichnet, dass**:
das photoelektrische Modul (10) auf einer Bodenoberfläche positioniert ist und eine Basis (11) umfasst, wobei die Basis (11) einen Umfang aufweist, in dem ein wasserdurchlässiger Kanal angeordnet ist, wobei die Basis (11) an ihrer Oberseite mit einem Einfassungsrahmen (111) versehen ist, wobei der Einfassungsrahmen (111) einen Innenraum aufweist, in dem ein Solarpanel (12) aufgenommen und montiert ist, wobei die Basis (11) eine Unterseite aufweist, auf der Befestigungselemente (112) zur Positionierung auf der wasserdurchlässigen Einheit (20) angeordnet sind, wobei im Inneren der Basis (11) ein hohler Bereich (113) ausgebildet ist, wobei ein Umfang des hohlen Bereichs (113) mit Durchgangslöchern (114) versehen ist, um Verbindungsrohre (13) aufzunehmen, die darin passen, um eine Verbindung und Kommunikation mit einer benachbarten Basis (11) herzustellen; und
die wasserdurchlässige Einheit (20) einen wasserdurchlässigen Straßenbelag umfasst und unterhalb des photoelektrischen Moduls (10) angeordnet ist;
wobei die aus den oben genannten Komponenten gebildete Straßenbelagsanordnung es dem photoelektrischen Modul (10) ermöglicht, Sonnenenergie in nutzbare elektrische Energie umzuwandeln, und zudem Regenwasser auf der Bodenoberfläche über wasserdurchlässige Rohre (21, 21a) mittels in der wasserdurchlässigen Einheit (20) ausgebildeter Entwässerungslöcher schnell in den Untergrund ableitet.

2. Photoelektrische, wasserdurchlässige Straßenbelagsanordnung nach Anspruch 1, **dadurch gekennzeichnet, dass** wasserdurchlässige Rohre (21a) einer Rahmenkonstruktion der wasserdurchlässigen Einheit (20), die zwischen zwei benachbarten photoelektrischen Modulen (10) angeordnet sind, einen relativ langen Rohrkörper aufweisen und ein oberes Ende aufweisen, das bündig mit der Bodenoberfläche abschließt.

3. Photoelektrische, wasserdurchlässige Straßenbelagsanordnung nach Anspruch 1, **dadurch gekennzeichnet, dass** der am Umfang der Basis (11) angeordnete wasserdurchlässige Kanal eine wellenförmige Konfiguration des Umfangs des Solarpanels (12) des photoelektrischen Moduls (10) umfasst, das im Inneren des Einfassungsrahmens (111) der Basis (11) positioniert ist, sowie an einer Unterseite des Einfassungsrahmens (111) vorgesehene erhabene Rippen (116), um Spalte zwischen dem Solarpanel (12) und der Basis (11) zu bilden, damit das Regenwasser durch diese hindurch nach unten eindringen kann.

4. Photoelektrische, wasserdurchlässige Straßenbelagsanordnung nach Anspruch 1, **dadurch gekennzeichnet, dass** der am Umfang der Basis (11) angeordnete wasserdurchlässige Kanal einen an jeder Ecke des Solarpanels (12) des photoelektrischen Moduls (10) angeordneten Aufnahmeblock (122) umfasst, der in das Innere des Einfassungsrahmens (111) der Basis (11) passt, sowie an einer Unterseite des Einfassungsrahmens (111) vorgesehene erhabene Rippen (116), um Spalte zwischen dem Solarpanel (12) und der Basis (11) zu bilden, damit das Regenwasser durch diese hindurch nach unten eindringen kann.

5. Photoelektrische, wasserdurchlässige Straßenbelagsanordnung nach Anspruch 1, **dadurch gekennzeichnet, dass** der am Umfang der Basis (11) angeordnete wasserdurchlässige Kanal wasserdurchlässige Löcher oder wasserdurchlässige Spalte umfasst, die einstückig am Umfang der Basis (11) ausgebildet sind, wobei zusätzlich ein weiteres Element daran angebracht ist, um wasserdurchlässige Löcher oder wasserdurchlässige Spalte zu bilden.

6. Photoelektrische, wasserdurchlässige Straßenbelagsanordnung nach Anspruch 1, **dadurch gekennzeichnet, dass** eine Unterseite der Basis (11) des photoelektrischen Moduls (10) mit Verankerungsabschnitten (115) versehen ist, um eine sicherere Verbindung mit Beton herzustellen.

7. Photoelektrische, wasserdurchlässige Straßenbelagsanordnung nach Anspruch 1, **dadurch gekennzeichnet, dass** die wasserdurchlässige Einheit (20) eine Rahmenkonstruktion umfasst, die aus einer Vielzahl vertikaler wasserdurchlässiger Rohre (21, 21a) gebildet ist, unter dem photoelektrischen Modul (10) angeordnet ist und wo Betonmörtel eingebracht wird, um eine Betonstraßenbelagsstruktur mit einer Vielzahl von Entwässerungslöchern zu bilden.

8. Photoelektrische, wasserdurchlässige Straßenbelagsanordnung nach Anspruch 1, **dadurch gekennzeichnet, dass** die wasserdurchlässige Einheit (20) als eine von zwei Arten von wasserdurchlässigem Straßenbelag ausgebildet ist, nämlich als wasserdurchlässiger Straßenbelag, bei dem ein wasserdurchlässiges Material direkt verlegt wird, oder als wasserdurchlässiger Straßenbelag, bei dem Löcher in den Straßenbelag gebohrt werden, um wasserdurchlässige Löcher zu bilden.

9. Photoelektrische, wasserdurchlässige Straßenbelagsanordnung nach Anspruch 1, **dadurch gekennzeichnet, dass** zwischen einer Innenseite des Einfassungsrahmens (111) der Basis (11) des photoelektrischen Moduls (10) und dem hohlen Bereich (113) ein Stück Vliesstoff zur Abschirmung angeordnet ist.

10. Photoelektrische, wasserdurchlässige Straßenbelagsanordnung nach Anspruch 7, **dadurch gekennzeichnet, dass** die wasserdurchlässige Einheit (20) eine Gitterabdeckplatte (22) umfasst, die auf einer Rohröffnung an der Oberseite jedes der wasserdurchlässigen Rohre (21, 21a) angebracht ist, und ein Boden eines Rohrkörpers mit einer nach außen erweiterten Verbindungsrippe (23) zur Verbindung mit einem anderen der wasserdurchlässigen Rohre (21, 21a) versehen ist, sodass die wasserdurchlässigen Rohre (21, 21a) miteinander verbunden sind, um eine Rahmenstruktur zu bilden.

11. Photoelektrische, wasserdurchlässige Straßenbelagsanordnung nach Anspruch 7, **dadurch gekennzeichnet, dass** an den Außenumfängen der äußersten Verbindungsrippen (23) zweier benachbarter Kanten vorstehende Zapfen (24) und dazu passende Zapfenlöcher (25) ausgebildet sind, die einander entsprechen, zum Verlegen und Verbinden einer weiteren wasserdurchlässigen Einheit (20) ausgebildet sind.

12. Photoelektrische, wasserdurchlässige Straßenbelagsanordnung nach Anspruch 1, **dadurch gekennzeichnet, dass** die Basis (11) des photoelektrischen Moduls (10) und die wasserdurchlässige Einheit (20) entsprechend miteinander verbunden sind und eine Form (30) zum Vorfertigen eines Plattenmoduls (1) mit Betonmörtel (60) zum Verlegen verwendet wird.

## Revendications

1. Configuration de pavé photoélectrique perméable à l'eau, qui est formée d'un module photoélectrique (10) et d'une unité perméable à l'eau (20), **caractérisée en ce que** :
le module photoélectrique (10) est positionné sur une surface du sol et comprend une base (11), la base (11) ayant une périphérie où un canal perméable à l'eau est disposé, la base (11) étant pourvue, sur une partie supérieure de cela, d'un cadre d'enceinte (111), le cadre d'enceinte (111) ayant un intérieur où un panneau solaire (12) est reçu et monté, la base (11) ayant une surface inférieure sur laquelle sont disposés des éléments de fixation (112) pour le positionnement sur l'unité perméable à l'eau (20), une région évidée (113) étant formée dans un intérieur de la base (11), une périphérie de la région évidée (113) étant formée avec des trous traversants (114) pour recevoir des tuyaux de communication (13) pour s'y adapter pour l'interconnexion et la communication avec une base adjacente (11) ; et
l'unité perméable à l'eau (20) comprend un pavé perméable à l'eau et est disposée sous le module photoélectrique (10) ;
où la configuration de pavé formée des composants susmentionnés permet au module photoélectrique (10) de convertir l'énergie de la lumière du soleil en énergie électrique pour l'utilisation et également évacue rapidement l'eau de pluie sur la surface du sol par des tuyaux perméables à l'eau (21, 21a) sous terre au moyen de trous de drainage formés dans l'unité perméable à l'eau (20).

2. Configuration de pavé photoélectrique perméable à l'eau selon la revendication 1, **caractérisée en ce que** les tuyaux perméables à l'eau (21a) d'une structure de cadre de l'unité perméable à l'eau (20) qui sont disposés entre deux modules photoélectriques (10) adjacents ont un corps de tuyau relativement long et a une extrémité supérieure qui est au ras de la surface du sol.

3. Configuration de pavé photoélectrique perméable à l'eau selon la revendication 1, **caractérisée en ce que** le canal perméable à l'eau disposé dans la périphérie de la base (11) comprend une configuration ondulée d'une périphérie du panneau solaire (12) du module photoélectrique (10) positionné dans un intérieur du cadre d'enceinte (111) de la base (11), et des nervures en relief (116) prévues sur un fond du cadre d'enceinte (111), de manière à former des interstices entre le panneau solaire (12) et la base (11) pour permettre à l'eau de pluie d'y pénétrer vers le bas.

4. Configuration de pavé photoélectrique perméable à l'eau selon la revendication 1, **caractérisée en ce que** le canal perméable à l'eau disposé dans la périphérie de la base (11) comprend un bloc de support (122) disposé à chacun des coins du panneau solaire (12) du module photoélectrique (10) pour s'adapter dans un l'intérieur du cadre d'enceinte (111) de la base (11), et des nervures en relief (116) prévues sur un fond du cadre d'enceinte (111), de manière à former des interstices entre le panneau solaire (12) et la base (11) pour permettre à l'eau de pluie d'y pénétrer vers le bas.

5. Configuration de pavé photoélectrique perméable à l'eau selon la revendication 1, **caractérisée en ce que** le canal perméable à l'eau disposé dans la périphérie de la base (11) comprend des trous perméables à l'eau ou des interstices perméables à l'eau qui sont formés de manière intégrante dans la périphérie de la base (11), un élément supplémentaire étant additionnellement adapté à cela pour former des trous perméables à l'eau ou des interstices perméables à l'eau.

6. Configuration de pavé photoélectrique perméable à l'eau selon la revendication 1, **caractérisée en ce qu'**une surface inférieure de la base (11) du module photoélectrique (10) est pourvue de portions d'ancrage (115) pour se combiner de manière plus solide au béton.

7. Configuration de pavé photoélectrique perméable à l'eau selon la revendication 1, **caractérisée en ce que** l'unité perméable à l'eau (20) comprend une structure de cadre formée d'une pluralité de tuyaux verticaux perméables à l'eau (21, 21a) et est disposée sous le module photoélectrique (10), et est coulée avec du coulis de béton pour construire un pavé de structure en béton ayant une pluralité de trous de drainage.

8. Configuration de pavé photoélectrique perméable à l'eau selon la revendication 1, **caractérisée en ce que** l'unité perméable à l'eau (20) est formée comme l'un d'un pavé perméable à l'eau par pavage direct avec un matériau perméable à l'eau et un pavé perméable à l'eau où des trous sont percés dans un pavé pour former des trous perméables à l'eau.

9. Configuration de pavé photoélectrique perméable à l'eau selon la revendication 1, **caractérisée en ce qu'**une pièce de tissu non tissé est disposée entre une face interne du cadre d'enceinte (111) de la base (11) du module photoélectrique (10) et la région évidée (113) pour protection.

10. Configuration de pavé photoélectrique perméable à l'eau selon la revendication 7, **caractérisée en ce que** l'unité perméable à l'eau (20) comprend une plaque supérieure à grillage (22) montée sur une ouverture de tuyau d'une partie supérieure de chacun des tuyaux perméables à l'eau (21, 21a), et un fond d'un corps de tuyau est pourvu d'une nervure de connexion élargie vers l'extérieur (23) pour la connexion à un autre des tuyaux perméables à l'eau (21, 21a), de sorte que les tuyaux perméables à l'eau (21, 21 a) soient interconnectés pour former une structure de cadre.

11. Configuration de pavé photoélectrique perméable à l'eau selon la revendication 7, **caractérisée en ce que** des tenons saillants (24) et des mortaises d'ajustement (25), qui se correspondent les uns aux autres, sont formés dans des circonférences extérieures des nervures de connexion les plus éloignées (23) de deux bords adjacents pour la pose et la connexion d'une autre unité perméable à l'eau (20).

12. Configuration de pavé photoélectrique perméable à l'eau selon la revendication 1, **caractérisée en ce que** la base (11) du module photoélectrique (10) et l'unité perméable à l'eau (20) sont combinées de manière correspondante et un moule (30) est appliqué pour préfabriquer un module de plaque (1) avec un coulis de béton (60) pour la pose.
